# EUROPÄISCHE PATENTSCHRIFT

(11) **EP 0 739 768 B1**
(45) Veröffentlichungstag und Bekanntmachung des Hinweises auf die Patenterteilung: **31.01.2001**
(21) Anmeldenummer: 96103205.9
(22) Anmeldetag: 01.03.1996
(51) Int. Cl.: B60H 1/00

(54) **Klimaanlage**
Air conditioner
Dispositif de climatisation

(30) Priorität: 28.04.1995 DE 19515793
(43) Veröffentlichungstag der Anmeldung: 30.10.1996
(73) Patentinhaber: AURORA Konrad G. Schulz GmbH & Co, 69427 Mudau (DE)
(72) Erfinder: Leutz, Walter, 69412 Eberbach (DE)
(74) Vertreter: Splanemann Reitzner Baronetzky Westendorp Patentanwälte

(56) Entgegenhaltungen:
- DE-A- 3 224 895
- DE-A- 4 113 246
- US-A- 4 592 207
- US-A- 4 622 831
- US-A- 4 727 728
- US-A- 5 285 654

## Beschreibung

Die Erfindung betrifft eine Klimaanlage gemäß dem Oberbegriff von Anspruch 1.

Eine derartige Klimaanlage ist aus der DE-OS-32 24 895 bekannt. Diese Klimaanlage wird als sogenannte Hutze auf das Dach eines Kraftfahrzeugs, insbesondere eines Omnibusses aufgesetzt und besteht aus einer Kombination von Verflüssigern mit entsprechenden Gebläsen und Wärmetauschern, denen ebenfalls entsprechende Gebläse zugeordnet sind, wobei die Gebläse den Verflüssigern bzw. Wärmetauschern nachgeschaltet sind. Unter Wärmetauschern sei hier ein Heizwärmetauscher, ein Verdampfer oder eine Kombination dieser verstanden.

Bei der aus der gattungsgemäßen Druckschrift bekannten Klimaanlage ist die Verflüssigereinheit vor der Wärmetauschereinheit angeordnet. Dadurch wird die Gesamtkonstruktion vergleichsweise lang. Seitlich der Wärmetauscher sind je Gebläse eingesetzt und der Raum zwischen den Gebläsen wird durch vergleichsweise breite und daher recht schwere liegende Wärmetauscher eingenommen, wie es sich beispielsweise aus den Figuren 6, 7, 10 und 11 der DE-OS-32 24 895 ergibt.

Ferner ist es beispielsweise aus der DE-OS-41 13 246 bekannt geworden, den Raum zwischen den Wärmetauschern durch die Anordnung der Verflüssiger an dieser Stelle auszunutzen. Bei der aus dieser Druckschrift bekannten Klimaanlage ist jedoch die Anordnung so gedrängt, daß die Strömungswege insbesondere für die Verflüssiger starken Umlenkungen unterworfen sind, so daß die Gebläse für die Verflüssiger vergleichsweise stark ausgebildet sein müssen, was zu einem entsprechend großen Stromverbrauch und einer Gewichtsvergrößerung auf dem Dach des Fahrzeugs führt.

Ferner ist bereits, beispielsweise in der US-PS-45 92 207, vorgeschlagen worden, bei einer Klimaanlage auf dem Dach eines Kraftfahrzeugs Frischluftklappen vorzusehen, mit welchen Luft unter Umgehung der Wärmetauscher unmittelbar den Wärmetauschergebläsen zuführbar ist. Diese Lösung ist jedoch ausgesprochen ungünstig, wenn das betreffende Kraftfahrzeug auch in kühlerer Umgebung einsetzbar sein soll, da beheizte Frischluft nicht zugeführt werden kann, so daß beispielsweise bei Verwendung für einen Omnibus die Fahrgäste vor die Wahl gestellt sind, warme, aber verbrauchte Umluft zu ertragen oder kalter Frischluft unterworfen zu sein. Diese Lösung erfordert es zudem, daß die Gebläse für die Verflüssiger hinter den Verflüssigern angeordnet sind, was die Baulänge der Konstruktion wiederum erhöht. Dennoch ist der Platz seitlich neben den Verflüssigern ebenfalls recht knapp, und es müssen vergleichsweise abrupte Luftumlenkungen in Kauf genommen werden.

Darüber hinaus ist es auch bereits vorgeschlagen worden, eine Klimaanlage auf dem Dach eines Omnibus mit strömungstechnisch günstigeren Luftwegen auszustatten, wobei je getrennte Frischluftklappen, Umluftklappen und Abluftklappen vorgesehen sein sollen. Eine komplizierte Klappensteuerung ist erforderlich, um unterschiedliche Belüftung-, Beheizungs- und Klimatisierungszustände zu erzielen. Dennoch läßt sich bei dieser Lösung der Verflüssiger nicht mit Frischluft betreiben. Dies bedeutet, daß im Kühlungsbetrieb aus der Umluft bereits gekühlte Abluft abgezweigt wird und über die Verflüssiger ins Freie gelangt. Hierdurch wird der Wirkungsgrad ausgesprochen ungünstig, denn durch die Zuführung kalter Abluft zur warmen Umgebung wird die für die Kühlung der Umluft erforderliche Energie sogleich wieder vernichtet.

Die bereits bekannten Lösungen weisen zudem den Nachteil auf, daß relativ viel Energie für die Gebläse der Verflüssiger erforderlich ist. Dies bedeutet, daß die Gebläse und damit der gesamte Dachaufbau schwerer wird, keine Kompaktbauweise erreichbar ist und zudem der Verbrauch elektrischer Energie nicht unbeachtlich ist.

Demgegenüber liegt der Erfindung die Aufgabe zugrunde, eine Klimaanlage gemäß dem Oberbegriff von Anspruch 1 zu schaffen, die mittels konstruktiv einfach sicherstellbarer Maßnahmen eine Gewichtsreduzierung ermöglicht, wobei zudem eine verkleinerte Baulänge möglich ist.

Diese Aufgabe wird erfindungsgemäß durch Anspruch 1 gelöst. Vorteilhafte Weiterbildungen ergeben sich aus den Unteransprüchen.

Dadurch, daß die erfindungsgemäße Klimaanlage in an sich bekannter Weise Frischluft/Umluft-Klappen vor den Wärmetauschern vorsieht, ist zunächst ein regelbarer Frischluft- und/oder Umluftbetrieb möglich. Ein ganz besonderer Vorteil leitet sich aus der Maßnahme ab, daß im Umluftbetrieb die Frischluftöffnung strömungstechnisch versperrt ist. Praktisch baut sich im Raum zwischen der Frischluftöffnung und der Frischluft/Umluft-Klappe durch den entstehenden Staudruck ein Überdruck auf, so daß die schräg angeordnete Frischluftöffnung, die den Wärmetauschern zugeordnet ist, im Umluftbetrieb den Staudruck für die Verflüssiger automatisch erhöht.

Dies führt zu einer verstärkten Durchströmung der Verflüssiger, so daß die Gebläse für die Verflüssiger entsprechend kleiner dimensionierbar sind. Besonders günstig ist auch die Anordnung der Verflüssiger mit dem vorderen Ende knapp unterhalb des oberen Endes der Klimahutze und mit ihrem hinteren Ende aufliegend auf dem Dach des Omnibus. Hierdurch entsteht ein keilförmiger, den Staudruck besonders gut auffangender Überdruckraum, der die Durchströmung des Verflüssigers begünstigt. Zudem wird hierdurch die Möglichkeit eröffnet, die Verflüssigergebläse mindestens teilweise oberhalb des unteren/ hinteren Endes der Verflüssiger anzuordnen, und dadurch nicht nur Raum zu gewinnen, sondern auch eine Anordnung an einer Stelle zu ermöglichen, an welcher der Auslaß der Gebläse auf äußeren, durch den Fahrtwind erzeugten Unterdruck trifft.

Somit ermöglicht diese Anordnung eine automatische Leistungserhöhung für die Verflüssiger im Umluftbetrieb, was besonders günstig ist, denn die Klimatisierung wird regelmäßig mit Umluft durchgeführt. Dennoch steht auch Staudruck zur Verfügung, wenn eine Frischluftzufuhr gewünscht ist, beispielsweise im Heizbetrieb. In dieser Stellung ist wiederum der Staudruck an den Verflüssigern automatisch reduziert, was insofern günstig ist, da diese dann nicht benötigt werden und bei zu großem Staudruck lediglich als Strömungshindernisse wirken.

Der Luftwiderstandsbeiwert ist demnach durch die automatische und gezielte Umschaltung, die je an den erforderlichen Stellen den Staudruck maximiert, so gering wie möglich. Nachdem zusätzlich die Gebläseleistung durch Unterstützung sowohl der Wärmetauscher-Gebläse als auch der Verflüssiger-Gebläse durch den optimierten Staudruck reduzierbar ist, ergibt sich insgesamt eine wesentlich günstigere Energiebilanz als bei den bekannten Lösungen.

Trotz dieser sehr beträchtlichen Vorteile läßt sich die Erfindung mit einfachen Mitteln realisieren. Es ist lediglich je eine Schwenkklappe vor dem Wärmetauscher erforderlich, die beispielsweise elektisch, hydraulisch oder pneumatisch betätigt werden kann. Insbesondere ist es nicht erforderlich, eine Schwenkklappe im verschmutzungsempfindlichen Anströmbereich der Klimaanlage vorzusehen; vielmehr kann durch die Strömungsumlenkung bei mittenachsenparalleler Anordnung der Achse der Schwenkklappe der gröbste Schmutz aus dem Bereich der Schwenkklappe herausgehalten werden.

Aufgrund der besonders günstigen Kompaktanordnung ergibt sich zudem die Möglichkeit, an geeigneter Stelle ein Filter vorzusehen, zweckmäßig entweder vor oder nach den Frischluft/Umluft-Klappen.

Gemäß einer weiteren besonders vorteilhaften Ausgestaltung ist es vorgesehen, daß die Verflüssigergebläse gegeneinander versetzt raumsparend angeordnet sind. Trotz vergleichsweise großen Luftdurchtrittsquerschnitts läßt sich so eine Kompaktausgestaltung der Verflüssigereinheit realisieren, wobei die Anordnung im Bereich maximalen Unterdrucks zur weiteren Verminderung der erforderlichen Leistung der Verflüssigergebläse beiträgt.

Weitere Einzelheiten, Vorteile und Merkmale ergeben sich aus der nachstehenden Beschreibung eines Ausführungsbeispiels der Erfindung anhand der Zeichnung.

Es zeigen:
- Fig. 1: eine schematische Ansicht einer auf dem Dach eines Omnibusses aufbringbaren erfindungsgemäßen Klimaanlage;
- Fig. 2: ein schematischer Schnitt entlang der Linie II-II aus Fig. 1; und
- Fig. 3: ein schematischer Schnitt entlang der Linie III-III aus Fig. 1.

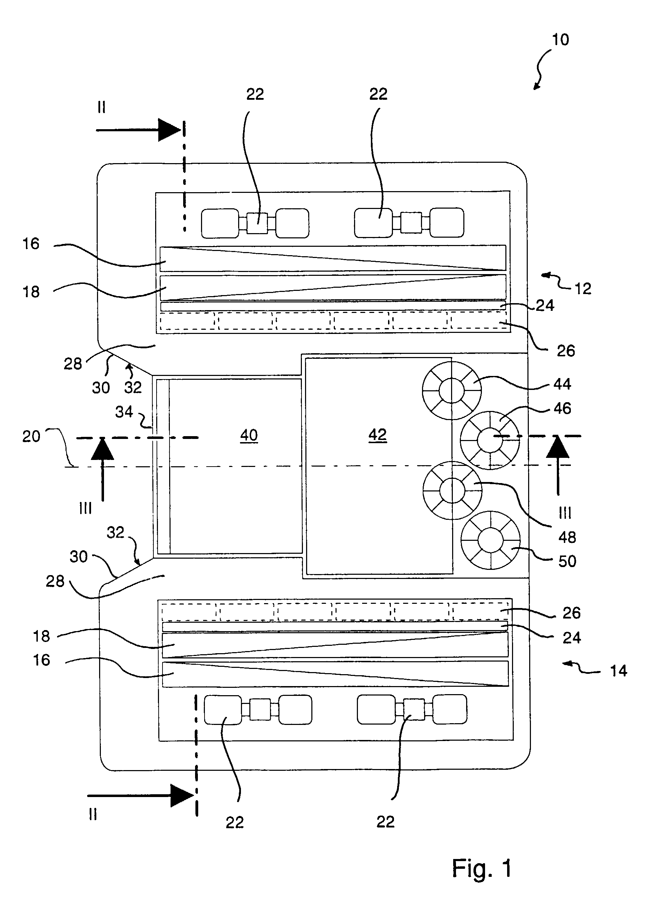

Wie aus Fig. 1 ersichtlich ist, weist eine erfindungsgemäße Klimaanlage 10 Wärmetauscher 12, 14 auf, die längs eines Dachs eines nicht dargestellten Fahrzeugs angeordnet sind. Die Wärmetauscher 12, 14 bestehen je aus einem Verdampfer 16 und einem Heizwärmetauscher 18. Noch außerhalb, d.h. stärker beabstandet von einer Mittenachse 20 des Fahrzeugs, sind Doppelradialgebläse 22 vorgesehen, die den Wärmetauscher 12, 14 durchtretende Luft in das Wageninnere blasen.

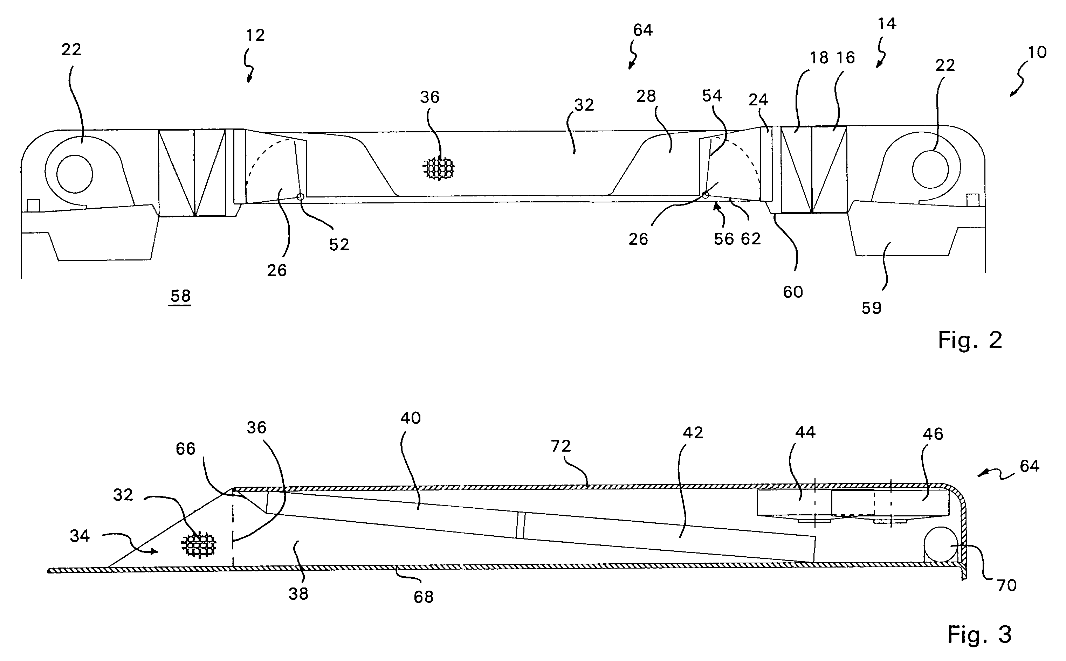

Die Wärmetauscher 12, 14 werden dementsprechend von innen nach außen durchströmt. Ferner sind eingangsseitig der Wärmetauscher 12, 14 Filter 24 vorgesehen, denen Frischluft/Umluft-Stellorgane, die hier als Frischluft/Umluft-Klappen 26 ausgebildet sind, vorgeschaltet sind. Die Frischluft/Umluft-Klappen 26 ermöglichen wahlweise die Zufuhr von Umluft aus dem Wageninneren und die Zufuhr von Frischluft aus einem Raum 28. Der Raum 28 ist in Strömungsverbindung mit einer Wärmetauscher-Frischluftöffnung 30, die beispielsweise durch ein Gitter 32 abgedeckt sein kann, das in Fig. 3 ersichtlich ist.

Die Wärmetauscher-Frischluftöffnungen erstrecken sich an Schrägflächen 32 und bilden von ihrer Wirkung her eine Art Düse zur Mittenachse 20 hin. Sie erstrecken sich praktisch über die gesamte Schrägfläche 32 und schließen damit an eine Verflüssiger-Frischluftöffnung 34 an, die über die gesamte Breite zwischen den Wärmetauscher-Frischluftöffnungen 30, 30 vorgesehen ist.

Die Verflüssiger-Frischluftöffnung 34 ist ebenfalls mit einem Gitter 36 abgedeckt, das aus Fig. 3 ersichtlich ist. Anschließend an die Verflüssiger-Frischluftöffnung 34 erstreckt sich ein keilförmiger Raum 38, und ein Verflüssiger 40 sowie anschließend an diesen ein Verflüssiger 42. Der Verflüssiger 40 ist etwas schmaler als der Verflüssiger 42, so daß der Raum 28 in horizontaler Ebene betrachtet ebenfalls leicht keilförmig verläuft. Hier ist eine gewisse Umlenkung und die gebildete Prallfläche erwünscht, um etwaige Schmutzpartikel abzusondern, bevor sie den Bereich der Frischluft/Umluft-Klappen 26 erreichen. Zudem ist die erforderliche Luftströmung im hinteren Bereich der Frischluft/Umluft-Klappen geringer, so daß ein entsprechender geringerer Strömungsquerschnitt ausreicht.

Andererseits ist durch die größere zur Verfügung stehende Baubreite des Verflüssigers 42 die Möglichkeit eröffnet, Verflüssigergebläse 44, 46, 48, 50 möglichst kompakt und versetzt zueinander so anzuordnen, daß sie den Wärmetauscher 42 teilweise überlappen und im Bereich maximalen Unterdrucks arbeiten, so daß vom Fahrtwind die Wirkung der Gebläse 44 bis 50 unterstützt wird. In diesem Zusammenhang hat es sich als besonders günstig herausgestellt, wenn die beiden vorderen Verflüssiger-gebläse 46, 48 den Wärmetauscher 42 je halb überlappen.

Die Ausgestaltung der erfindungsgemäßen Klimaanlage 10 im Schnitt ist aus Fig. 2 ersichtlich. Hier wie auch in den weiteren Figuren bezeichnen gleiche Bezugszeichen gleiche Teile. Wie ersichtlich ist, ist der Raum 28 anschließend an die Schrägfläche 32 ausreichend groß, um eine Strömungsberuhigung zu ermöglichen. Die Frischluft/Umluft-Klappen 26 sind um eine Schwenkachse 52 verschwenkbar, und zwar etwa um 90°. In einer nahezu senkrechten Stellung 54 ist der reine Umluftbetrieb vorgesehen, in welcher Umluft über eine Umluftöffnung 56 aus dem Innenraum 58 des Omnibusses abgesaugt wird und nach Filterung durch den Filter 24 nacheinander dem Heizwärmetauscher 18, dem Verdampfer 16 und dem Doppelradialgebläse 22 zugeführt wird. Das Doppelradialgebläse 22 bläst die Umluft dann in einen Druckraum 59 aus, der in an sich bekannter Weise mit Düsen bestückt ist, die oberhalb der Sitze der Fahrgäste angeordnet sind.

Der den Verdampfer 16 und den Heizwärmetauscher 18 aufnehmende Raum ist etwas vertieft ausgebildet, so daß sich eine Kondensatwasserwanne 60 ergibt, die in an sich bekannter Weise mit einem Ablaufstutzen versehen ist, der in Fig. 2 nicht dargestellt ist.

Demgegenüber hat die Frischluft/Umluft-Klappe 26 im reinen Frischluftbetrieb eine liegende Stellung 62, so daß Luft ohne weitere Umlenkung aus dem Raum 28 in die Wärmetauscher 12, 14 strömen kann.

Wie aus Fig. 2 ebenfalls ersichtlich ist, schließt die Oberkante der Verflüssigereinheit 64, die die Verflüssiger 40, 42, die Verflüssigergebläse 44 bis 50 sowie die Verflüssiger-Frischluftöffnung 34 umfaßt, nahezu höhengleich mit der Einheit der Wärmetauscher 12, 14 ab, so daß der Luftwiderstandsbeiwert des Fahrzeugs nicht durch vorstehende Teile verschlechtert wird.

Wie aus Fig. 3 ersichtlich ist, erstrecken sich die Verflüssiger 40, 42 in einem recht flachen Winkel von vorne oben nach hinten unten. Zur Verbesserung der Anströmwirkung kann ein schräges Luftleitelement 66 vorgesehen sein, das die Anströmung des vorderen Verflüssigers 40 verbessert.

Wie aus Fig. 3 ebenfalls ersichtlich ist, ist eine Dachhaut 68 des Fahrzeugs im Bereich der Verflüssigereinheit 64 durchbrechungsfrei. Es versteht sich, daß sie im Bereich der Wärmetauscher 12, 14 die erforderlichen Umluftöffnungen und Ausströmöffnungen für die Doppelradialgebläse 22 aufweist. Es versteht sich, daß die Dachhaut 68 jedoch Durchbrechungen für die Zufuhr des Kühlmittels zu den Verflüssigern 40, 42 aufweist, die an geeigneter Stelle zusammengefaßt sein können. Ein entsprechender Kühlmittelsammler 70 ist unterhalb des Gebläses 46 angedeutet.

Wie aus Fig. 3 ersichtlich ist, lassen sich besonders günstig Axialgebläse als Verflüssigergebläse 44, 46 verwenden. Es versteht sich jedoch, daß anstelle dessen auch ohne weiteres Radialgebläse einsetzbar sind, wenn dies gewünscht ist.

Die Erfindung erlaubt außerdem die Vormontage an einer Hutze 72, die den oberen Abschluß der erfindungsgemäßen Klimaanlage 10 bildet. Für die Montage müssen dementsprechend dann lediglich die elektrischen und hydraulischen Anschlüsse verbunden werden, so daß die Endmontage recht preisgünstig ist.

Ferner ist es möglich, die Verflüssigergebläse 44 bis 50 nach hinten ausblasen zu lassen, und/oder anstelle von Axialgebläsen Radialgebläse vorzusehen.

## Patentansprüche

1. Klimaanlage auf einem Dach (68) für Kraftfahrzeuge, insbesondere für schnellfahrende Kraftfahrzeuge wie Omnibusse, mit längs eines Teils des Dachs (68) des Fahrzeugs angeordneten Wärmetauschern (12, 14) und mit einer Verflüssigereinheit mit im wesentlichen flachliegend auf dem Dach angeordneten Verflüssigern und einer Verflüssiger-Frischluftöffnung für die Zufuhr von Frischluft zu den Verflüssigern, dadurch gekennzeichnet, daß die Wärmetauscher (12, 14) mittels Frischluft/Umluft-Stellorganen, wie Frischluft/Umluft-Klappen (26), wahlweise von Frischluft und/oder Umluft beaufschlagbar sind, mit welchen Stellorganen ein Frischluftbetrieb und/oder ein Umluftbetrieb einstellbar ist, daß eine Wärmetauscher-Frischluftöffnung (30) für die Zuleitung von Frischluft zu den Wärmetauschern (12, 14) im Frischluftbetrieb vorgesehen ist und daß die Wärmetauscher-Frischluftöffnung (30) strömungstechnisch neben und parallelgeschaltet zu der Verflüssiger-Frischluftöffnung (34) angeordnet ist.

2. Klimaanlage nach einem der vorhergehenden Ansprüche, dadurch gekennzeichnet, daß im Umluftbetrieb das Stellorgan (26) einen geschlossenen Raum anschließend an die Wärmetauscher-Frischluftöffnung (30) abschließt, in welchem Staudruck ausbildbar ist.

3. Klimaanlage nach Anspruch 1, dadurch gekennzeichnet, daß die Frischluftöffnungen (30, 34) sich vom Dach (68) des Fahrzeugs aufwärts erstrecken und daß die Wärmetauscher (12, 14) und die Verflüssigereinheit (64) mindestens teilweise auf dem Dach (68) des Fahrzeugs angeordnet sind.

4. Klimaanlage nach einem der vorhergehenden Ansprüche, dadurch gekennzeichnet, daß die Frischluftöffnungen (12, 14) im wesentlichen in Fahrtrichtung des Fahrzeugs, schräg nach oben und/oder in einem Winkel von 0 bis 90°, insbesondere von etwa 45°, zur Mittenachse (20) des Fahrzeugs hin weisen.

5. Klimaanlage nach einem der vorhergehenden Ansprüche, dadurch gekennzeichnet, daß Wärmetauscher (12, 14) beidseitig der Verflüssigereinheit (64) angeordnet sind und die Wärmetauscher-Frischluftöffnung (30) gegenüber der Verflüssiger-Frischluftöffnung (34) weiter vorne angeordnet ist.

6. Klimaanlage nach einem der vorhergehenden Ansprüche, dadurch gekennzeichnet, daß die Wärmetauscher-Frischluftöffnung (30) eine Schrägfläche (32) aufspannt, die zur Mittenachse (20) des Fahrzeugs hin an der Verflüssiger-Frischluftöffnung (34) mündet.

7. Klimaanlage nach einem der vorhergehenden Ansprüche, dadurch gekennzeichnet, daß die Verflüssiger (40, 42) schrägliegend angeordnet sind und sich von vorne oben nach hinten unten erstrecken.

8. Klimaanlage nach einem der vorhergehenden Ansprüche, dadurch gekennzeichnet, daß die Stellorgane als Klappen (26) ausgebildet sind, die um eine gemeinsame, sich parallel zur Längsachse (20) des Fahrzeugs erstreckende Schwenkachse (52) schwenkbar sind und in der im wesentlichen senkrechten Stellung (54) den Umluftbetrieb und der im wesentlichen waagerechten Stellung (62) den Frischluftbetrieb ermöglichen.

9. Klimaanlage nach einem der vorhergehenden Ansprüche, dadurch gekennzeichnet, daß die Verflüssigereinheit (64) an sich bekannte Axialgebläse (44, 46, 48, 50) aufweist, die nach oben ausblasen und stromab der Verflüssiger (40, 42) angeordnet sind.

10. Klimaanlage nach einem der vorhergehenden Ansprüche, dadurch gekennzeichnet, daß sich zwischen dem Fahrzeugdach (68) und den Verflüssigern (40, 42) ein nach hinten keilförmig zulaufender Raum (38) erstreckt, der an seiner Vorderseite von der Verflüssiger-Frischluftöffnung (34) abgeschlossen ist.

11. Klimaanlage nach einem der vorhergehenden Ansprüche, dadurch gekennzeichnet, daß die Gebläse (44, 46, 48, 50) der Verflüssigereinheit (64) gegeneinander versetzt raumsparend angeordnet sind.

12. Klimaanlage nach einem der vorhergehenden Ansprüche, dadurch gekennzeichnet, daß die Gebläse (44, 46, 48, 50) der Verflüssigereinheit (64) einen Verflüssiger (42) in der Projektion teilweise oder vollständig überlappend angeordnet sind.

13. Klimaanlage nach einem der vorhergehenden Ansprüche, dadurch gekennzeichnet, daß die Gebläse (44, 46, 48, 50) der Verflüssigereinheit (64) mindestens in der Projektion zwischen den Wärmetauschern (12, 14) angeordnet sind und daß die Baulänge der Klimaanlage (10) im wesentlichen durch die Baulänge der Wärmetauscher (12, 14) bestimmt ist.

14. Klimaanlage nach einem der vorhergehenden Ansprüche, dadurch gekennzeichnet, daß die Wärmetauscher (12, 14) Heizwärmetauscher (18) und/oder Verdampfer (16) aufweisen, denen insbesondere ein Filter (24) vorgeschaltet ist, das sich über die gesamte Länge der Wärmetauscher (12, 14) erstreckt.

## Claims

1. Air conditioner on a roof (68) for motor vehicles, especially for fast travelling vehicles such as busses, with heat exchangers (12, 14) arranged lengthways along a part of the roof (68) of the vehicle and with a liquefier unit with essentially flat laying liquefiers arranged on the roof and a liquefier-fresh air opening for conveying fresh air to the liquefiers, characterised in that the heat exchangers (12, 14) can admit either fresh air and/or recirculated air by means of fresh air/circulating air control units, such as fresh air/circulating air flaps (26), with which control units fresh air operation and/or recirculated air operation may be selected, that a heat exchanger fresh air opening (30) for conducting fresh air to the heat exchangers (12, 14) in fresh air operation is provided and that the heat exchanger fresh air opening (30) is arranged fluidically next to and switched parallel to the liquefier-fresh air opening (34).

2. Air conditioner according to one of the preceding claims, characterised in that during recirculated air operation the control unit (26) closes off a closed area connected to the heat exchanger fresh air aperture (30), in which dynamic pressure can be formed.

3. Air conditioner according to claim 1, characterised in that the fresh air openings (30, 34) extend upwards from the roof (68) of the vehicle and that the heat exchangers (12, 14) and the liquefier unit (64) are placed at least partially on the roof (68) of the vehicle.

4. Air conditioner according to one of the preceding claims, characterised in that the fresh air openings (12, 14) point essentially diagonally upwards and/or at an angle from 0 to 90?, especially around 45?, in the direction of travel of the vehicle, to the centre axis (20) of the vehicle.

5. Air conditioner according to one of the preceding claims, characterised in that heat exchangers (12, 14) are placed on either side of the liquefier unit (64) and the heat exchanger-fresh air opening (30) is placed opposite the liquefier-fresh air opening (34) further forward.

6. Air conditioner according to one of the preceding claims, characterised in that the heat exchanger-fresh air opening (30) grips a diagonal surface (32), which merges towards the middle axis (20) of the vehicle on the liquefier-fresh air opening (34).

7. Air conditioner according to one of the preceding claims, characterised in that the liquefiers (40, 42) are positioned diagonally and extend from front above to rear below.

8. Air conditioner according to one of the preceding claims, characterised in that the control units are formed as flaps (26), which can be pivoted around a common swivelling axis (52), extending parallel to the longitudinal axis (20) of the vehicle and which permit recirculated air operation in the essentially vertical position (54) and fresh air operation in the essentially horizontal position (62).

9. Air conditioner according to one of the preceding claims, characterised in that, the liquefier unit (64) uses known axial ventilators (44, 46, 48, 50), which blow out towards the top and are positioned below the liquefiers (40, 42).

10. Air conditioner according to one of the preceding claims, characterised in that between the vehicle roof (68) and the liquefiers (40, 42) a wedge-shaped space (38), which is separated on its front side from the liquefier-fresh air aperture (34), extends towards the rear.

11. Air conditioner according to one of the preceding claims characterised in that the ventilators (44, 46, 48, 50) of the liquefier unit (64) are positioned compactly offset opposite each other.

12. Air conditioner according to one of the preceding claims characterised in that the ventilators (44, 46, 48, 50) of the liquefier unit (64) are arranged partly or completely overlapping a liquefier (42) in projection.

13. Air conditioner according to one of the preceding claims, characterised that the ventilators (44, 46, 48, 50) of the liquefier unit (64) are at least positioned in projection between the heat exchangers (12, 14) and that the construction length of the air conditioner (10) is essentially determined by the construction length of the heat exchangers (12, 14).

14. Air conditioner according to one of the preceding claims, characterised in that the heat exchangers (12, 14) feature heat exchangers for heating purposes (18) and/or evaporators (16), to which in particular a filter (24), which extends along the entire length of the heat exchangers (12, 14), is connected.

## Revendications

1. Dispositif de climatisation situé sur un toit (68) pour véhicules automobiles, notamment pour des véhicules automobiles roulant à vive allure tels que dès autobus, comprenant des échangeurs thermiques (12, 14) disposés le long d'une partie du toit (68) du véhicule et avec une unité de condenseur comprenant des condenseurs disposés essentiellement à plat sur le toit et une ouverture d'air frais de condenseur pour l'arrivée d'air frais vers les condenseurs, caractérisé en ce que facultativement de l'air frais et/ou de l'air ambiant peut être appliqué aux échangeurs thermiques (12, 14) à l'aide d'organes de réglage de l'air frais / de l'air ambiant, tels que des clapets d'air frais / d'air ambiant (26), avec ces organes de réglage, un fonctionnement d'air frais et/ou un fonctionnement d'air ambiant peut être réglé, en ce qu'une ouverture d'air frais de l'échangeur thermique (30) est prévue, dans un fonctionnement d'air frais, pour l'amenée d'air frais aux échangeurs thermiques (12, 14) et en ce que l'ouverture d'air frais de l'échangeur thermique (30) est disposée, en termes d'écoulement, en étant montée en dérivation et en parallèle à l'ouverture d'air frais du condenseur (34).

2. Dispositif de climatisation selon l'une des revendications précédentes, caractérisé en ce que dans un fonctionnement d'air ambiant, l'organe de réglage (26) obture un espace fermé raccordé à l'ouverture d'air frais de l'échangeur thermique (30) dans lequel une pression dynamique peut être développée.

3. Dispositif de climatisation selon la revendication 1, caractérisé en ce que les ouvertures d'air frais (30, 34) s'étendent vers le haut du toit (68) du véhicule et en ce que les échangeurs thermiques (12, 14) et l'unité de condenseur (64) sont disposés au moins partiellement sur le toit (68) du véhicule.

4. Dispositif de climatisation selon l'une des revendications précédentes, caractérisé en ce que les ouvertures d'air frais (12, 14) essentiellement dans le sens de roulement du véhicule, sont orientées à l'oblique vers le haut et/ou en angle de 0 à 90°, notamment presque de 45°, par rapport à l'axe médian (20) du véhicule.

5. Dispositif de climatisation selon l'une des revendications précédentes, caractérisé en que les échangeurs thermiques (12, 14) sont disposés des deux côtés de l'unité de condenseur (64) et l'ouverture d'air frais de l'échangeur thermique (30) est disposée plus loin en avant en face de l'ouverture d'air frais du condenseur (34).

6. Dispositif de climatisation selon l'une des revendications précédentes, caractérisé en ce que l'ouverture d'air frais de l'échangeur thermique (30) positionne une surface oblique (32) s'ouvrant vers l'axe médian (20) du véhicule sur l'ouverture d'air frais du condenseur (34).

7. Dispositif de climatisation selon l'une des revendications précédentes, caractérisé en ce que les condenseurs (40, 42) sont disposés à l'oblique et s'étendent de l'avant en haut vers l'arrière en bas.

8. Dispositif de climatisation selon l'une des revendications précédentes, caractérisé en ce que les organes de réglage sont conçus comme des clapets (26), qui peuvent basculer autour d'un pivot (52) commun, s'étendant parallèlement à l'axe longitudinal (20) du véhicule, et permettent le fonctionnement d'air ambiant dans la position essentiellement perpendiculaire (54) et le fonctionnement d'air frais dans la position essentiellement horizontale (62).

9. Dispositif de climatisation selon l'une des revendications précédentes, caractérisé en ce que l'unité de condenseur (64) présente des buses axiales (44, 46, 48, 50) connues en soi, qui soufflent vers le haut et sont disposées en aval des condenseurs (40, 42).

10. Dispositif de climatisation selon l'une des revendications précédentes, caractérisé en ce que, entre le toit du véhicule (68) et les condenseurs (40, 42), s'étend un espace décroissant en forme de coin vers l'arrière (38), qui est obturé sur son côté avant par l'ouverture d'air frais du condenseur (34).

11. Dispositif de climatisation selon l'une des revendications précédentes, caractérisé en ce que les buses (44, 46, 48, 50) de l'unité de condenseur (64) sont disposées de façon peu encombrante l'une contre l'autre en étant décalées.

12. Dispositif de climatisation selon l'une des revendications précédentes, caractérisé en ce que les buses (44, 46, 48, 50) de l'unité de condenseur (64) sont disposées en chevauchant partiellement ou totalement un condenseur (42) en projection.

13. Dispositif de climatisation selon l'une des revendications précédentes, caractérisé en ce que les buses (44, 46, 48, 50) de l'unité de condenseur (64) sont disposées au moins en projection entre les échangeurs thermiques (12, 14) et en ce que la longueur hors tout du dispositif de climatisation (10) est déterminée essentiellement par la longueur hors tout des échangeurs thermiques (12, 14).

14. Dispositif de climatisation selon l'une des revendications précédentes, caractérisé en ce que les échangeurs thermiques (12, 14) présentent des échangeurs thermiques chauffants (18) et/ou des évaporateurs (16), en amont desquels est inséré en particulier un filtre (24), qui s'étend sur toute la longueur des échangeurs thermiques (12, 14).
